# FASCICULE DE BREVET EUROPEEN

(11) **EP 1 364 890 B1**
(45) Date de publication et mention de la délivrance du brevet: **19.11.2008**
(21) Numéro de dépôt: 03350001.8
(22) Date de dépôt: 19.05.2003
(51) Int. Cl.: B65D 88/70, F16K 31/383

(54) **Dispositif de décharge brusque d'air**
Vorrichtung für die plötzliche Druckluftablade
Device for sudden discharge of compressed air

(30) Priorité: 24.05.2002 FR 0206374
(43) Date de publication de la demande: 26.11.2003
(73) Titulaire: Simoens, Hervé Hubert Jean, F-59700 Marcq en Baroeul (FR)
(72) Inventeur: Simoens, Hervé Hubert Jean, F-59700 Marcq en Baroeul (FR)
(74) Mandataire: Tournel, Jean Louis

(56) Documents cités:
- WO-A-97/43195
- DE-B- 1 259 160
- FR-A- 2 660 394
- GB-A- 2 067 269
- GB-A- 2 226 429
- US-A- 4 201 362

## Description

L'invention se rapporte à un dispositif de décharge brusque d'air.

Dans différentes applications, il est nécessaire de supprimer les accumulations de matières qui nuisent au bon fonctionnement de l'installation.

Tel est le cas des cimenteries ou des silos à pondéreux qui se vident par gravité.

Pour ce faire, au lieu d'utiliser des moyens purement mécaniques du type barre métallique manipulée par un individu, il est connu d'utiliser des dispositifs de décharge brusque d'air.

Le principe de ces dispositifs consiste à remplir une réserve ou capacité d'air à une pression donnée et de laisser s'échapper brusquement l'air pour produire une déflagration.

Sous l'effet de la déflagration, les accumulations de matières sont désagrégées.

L'avantage de ces dispositifs consiste dans le fait qu'ils peuvent fonctionner en automatique et être disposés en des endroits peu accessibles,

Les dispositifs connus comprennent donc un dispositif de contrôle de l'écoulement d'un fluide gazeux établi sur un parcours reliant l'accumulateur de fluide gazeux et, éventuellement, une tuyère d'éjection .

Ainsi, classiquement, le dispositif de décharge comprend un corps logeant un piston dont la face avant ferme un orifice dit de sortie qui débouche dans une conduite de sortie, ce corps présentant une conduite d'entrée qui la relie à la réserve ou capacité.

Pendant toute la période de remplissage de la capacité, la face arrière de ce piston est soumise à une pression maintenant le piston sur l'orifice de sortie.

Lorsque l'on relâche la pression maintenant la pression sur le piston, ce dernier recule brutalement et laisse le fluide passer de la capacité vers la conduite de sortie intégrant ou non une tuyère.

Sur les dispositifs connus à ce jour, la conduite de sortie a une section constante au long de son axe longitudinal identique à l'orifice de communication entre la capacité et le corps du dispositif.

Par contre, bien souvent, la géométrie de la conduite de sortie est différente au long de l'axe à savoir qu'au niveau de la zone d'application du piston, la section de la conduite de sortie est circulaire pour évoluer parfois vers une ellipse.

L'efficacité de ces dispositifs est directement liée à la vitesse d'évacuation de l'air contenu dans la réserve.

Cette vitesse d'éjection dépend notamment de la vitesse d'ouverture du piston.

C'est ainsi que l'on a imaginé d'alléger le piston.

Pour ce faire, celui-ci se présente alors sous la forme d'une coupelle notamment tronconique dont la face avant convexe ferme l'orifice de sortie et la face arrière concave porte un moyen de guidage avec le corps du dispositif.

Ce moyen de guidage est, de préférence, réduit à un coulisseau se déplaçant dans une coulisse fixée sur l'arrière du corps.

Ceci permet à la fois d'alléger le piston et de réduire les frottements par réduction des surfaces de guidage.

Pour des raisons notamment d'implantation de ces dispositifs de décharge brusque, il est commode que la conduite d'entrée qui relie le dispositif de contrôle de l'écoulement du fluide à la capacité soit sensiblement perpendiculaire à la conduite de sortie.

Cela permet en outre de limiter le parcours entre l'entrée et la sortie.

Au long de son parcours, on constate nécessairement une perte de charge réduisant l'efficacité du dispositif.

On peut certes augmenter l'efficacité de ces dispositifs en augmentant la capacité volumique de la réserve ou en augmentant la pression de l'air contenue dans la réserve mais cela n'est pas toujours possible économiquement ou en raison de l'implantation des dispositifs de décharge.

Un autre problème résulte du bruit produit par l'évacuation de l'air contenu dans la chambre arrière.

Pour réduire le bruit, lors de la vidange de la chambre arrière, il est ainsi connu d'évacuer l'air contenu dans cette chambre directement ou indirectement dans la conduite de sortie.

Pour ce faire, il est connu US-4.201.362 d'équiper la face avant du piston d'une série d'obturateurs disposés les uns derrière les autres.

Un tel montage entraîne alors une augmentation du poids de l'obturateur principal et donc une perte d'efficacité du dispositif.

On connait également DE 1259160 qui décrit un dispositif de décharge selon le préambule de la revendication 1.

L'invention se propose d'apporter une solution pour améliorer l'efficacité des systèmes précités.

A cet effet, l'invention a pour objet un dispositif de décharge brusque d'air comprenant un dispositif de contrôle d'écoulement d'air disposé entre une conduite d'entrée et une conduite de sortie, lequel dispositif de contrôle comprend un obturateur dit d'évacuation contrôlant l'écoulement de l'air contenu dans une chambre dite arrière vers la conduite de sortie, cet air maintenant un obturateur principal sur son siège, ce dispositif de décharge étant caractérisé en ce que le siège de cet obturateur d'évacuation se situe au niveau de la face avant de l'obturateur principal et pour l'évacuation de l'air contenu dans la chambre arrière, l'obturateur d'évacuation se déplace vers l'avant en sens opposé à celui de l'obturateur principal lorsqu'il quitte son siège.

L'invention sera bien comprise à l'aide de la description ci-après faite à titre d'exemple non limitatif en regard du dessin ci-annexé qui représente schématiquement :
- figure 1 : une vue en coupe d'un dispositif de décharge brusque d'air,
- figure 2 : une variante de réalisation du dispositif selon la revendication 1,

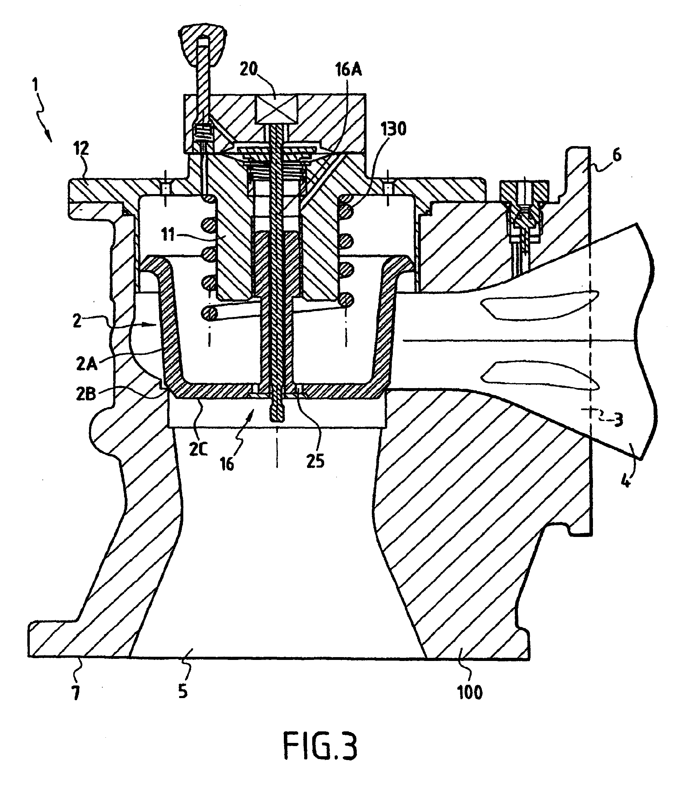

- figure 3 : une variante du dispositif de décharge en coupe partielle,
- figures 4 à 6 : différents détails de réalisation,

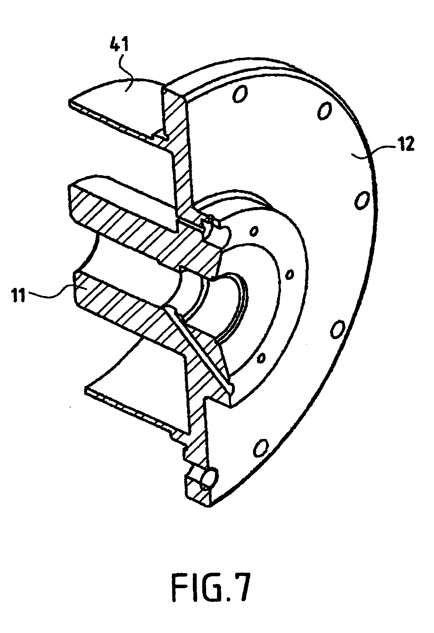

- figure 7 : une vue en coupe d'une pièce de l'arrière du canon selon la figure 3.

En se reportant au dessin, on voit un dispositif 1 de décharge brusque d'air comprenant un dispositif 2 de contrôle d'écoulement d'air disposé entre une conduite 3 d'entrée destinée à être reliée à une capacité 4 destinée à accumuler un volume d'air et une conduite 5 de sortie.

Pour la fixation de la capacité sur le dispositif, il est prévu, par exemple, d'équiper la conduite d'entrée du corps du dispositif d'une bride 6.

Une seconde bride 7 est généralement prévue pour le raccordement de la conduite de sortie sur une paroi ou sur une tuyère.

Classiquement, le dispositif 2 de contrôle est constitué par un obturateur principal 2A qui, appliqué sur un siège 2B, peut s'en écarter pour laisser passer librement l'air provenant de la capacité 4 vers la conduite 5 de sortie qui intègre éventuellement une tuyère, l'ensemble étant toujours appelé conduite de sortie.

Dans l'exemple représenté, l'obturateur principal 2A se présente sous la forme d'un piston ou d'une coupelle éventuellement tronconique dont la face avant 2C s'appuie sur un siège 28.

Cette face avant 2C est donc située sur la face convexe de la coupelle.

Ce piston ou coupelle ferme l'entrée de la conduite de sortie.

Comme on peut le voir, la conduite 3 d'entrée débouche latéralement dans le corps 100 du dispositif.

L'obturateur est guidé en translation.

A cet effet, dans les exemples présentés, notamment dans le cas de l'obturateur en forme de coupelle, la face arrière de la coupelle porte un coulisseau 10 qui coopère avec une coulisse 11 présentée par le corps du dispositif de décharge.

Cette coulisse est par exemple portée par une partie 12 de la paroi du corps du dispositif qui est amovible.

Pour le remplissage de la capacité, une entrée d'air débouche :
- soit, dans la chambre arrière 13 du corps du dispositif et le jeu entre la paroi latérale de cette chambre et la coupelle permet d'alimenter en air la capacité,
- soit, dans la conduite d'entrée et c'est toujours le jeu précité qui permet d'alimenter la chambre arrière pour appliquer le piston ou la coupelle.

Une double alimentation à la fois de la chambre arrière et de la capacité est également une solution retenue.

Bien souvent, il est prévu un moyen 130 de rappel de l'obturateur principal en sa position fermée mais cela n'est pas obligatoire.

Un dispositif 14 permet d'évacuer l'air contenu dans la chambre arrière pour permettre de faire reculer la coupelle ou piston.

Pour améliorer la déflagration il est nécessaire que l'obturateur principal dégage l'accès à la conduite de sortie rapidement et donc il faut évacuer l'air contenu dans la chambre arrière également rapidement.

Pour ce faire, classiquement, on équipe le dispositif 14 d'un obturateur 16 dit d'évacuation contrôlant l'écoulement de l'air contenu dans la chambre arrière 13 notamment vers la conduite 5 de sortie.

Lorsque l'air de cette chambre arrière 13 est évacué, l'obturateur principal 2A recule vers l'arrière pour dégager le passage.

Selon l'invention, le siège 17 de cet obturateur 16 d'évacuation se situe au niveau de la face avant 2C de l'obturateur principal 2A et pour l'évacuation de l'air contenu dans la chambre arrière, l'obturateur dit d'évacuation 16 se déplace vers l'avant en sens opposé à celui de l'obturateur principal 2A lorsqu'il quitte son siège.

Cette disposition technique est très avantageuse.

En effet, d'une part le bruit induit par la libération de l'air contenu dans la chambre arrière n'est plus perçu et se confond avec la déflagration car il n'est pas envoyé à l'extérieur comme auparavant et d'autre part le déplacement de l'obturateur vers l'avant élimine à chaque fois les possibles accumulations sur la face avant de la coupelle.

Un troisième avantage consiste dans le fait que l'obturateur d'évacuation 16 est désaccouplé de l'obturateur principal 2A de sorte que celui-ci est plus léger et peut donc reculer plus rapidement.

Cet obturateur 16 d'évacuation est porté par l'extrémité d'une tige 16A de commande guidée en translation au travers de la coupelle notamment tronconique.

L'extrémité de cette tige 16A de manoeuvre est reliée à un moyen moteur 20 pour induire son déplacement.

Dans une forme de réalisation, le moyen moteur 20 est un dispositif électromécanique qui s'appuie ou entraîne la tige de manoeuvre dans le sens souhaité.

Dans une autre forme de réalisation, ce moyen moteur 20 est une membrane déformable qui, soumise à une pression s'exerçant dans une chambre 21 dite de commande, peut se déplacer pour entraîner la manoeuvre de la tige.

Une chambre 22 située à l'opposé de celle induisant par son remplissage l'ouverture de l'obturateur d'évacuation est alimentée en air a la même pression que la chambre arrière pour faciliter le maintien de l'obturateur 16 sur son siège.

La tige 16A de manoeuvre traverse donc la coulisse et le coulisseau.

Un ressort 23 de rappel ramène l'obturateur d'évacuation en position sur son siège.

Ce ressort de rappel est logé dans un alésage que comporte la coulisse.

Comme on peut le voir, cette coulisse 11 est portée par la face arrière du corps du dispositif de décharge brusque.

Pour le transfert de l'air contenu dans la chambre arrière vers l'orifice bordé par le siège de l'obturateur d'évacuation, la coupelle éventuellement tronconique présente des canaux 25 d'évacuation débouchant dans une chambre 26 dite avant logeant une partie de l'obturateur d'évacuation.

Avantageusement, la partie concave de la coupelle 2A loge une forme délimitant une cuvette 30 dont la concavité est tournée vers l'arrière du corps du dispositif face à la coulisse et cette cuvette et la coulisse forment en position de recul de la coupelle une chambre 31 dite de compression formant un amortisseur pour le recul de la dite coupelle.

Un ressort de rappel de la coupelle tronconique applique celle-ci sur son siège.

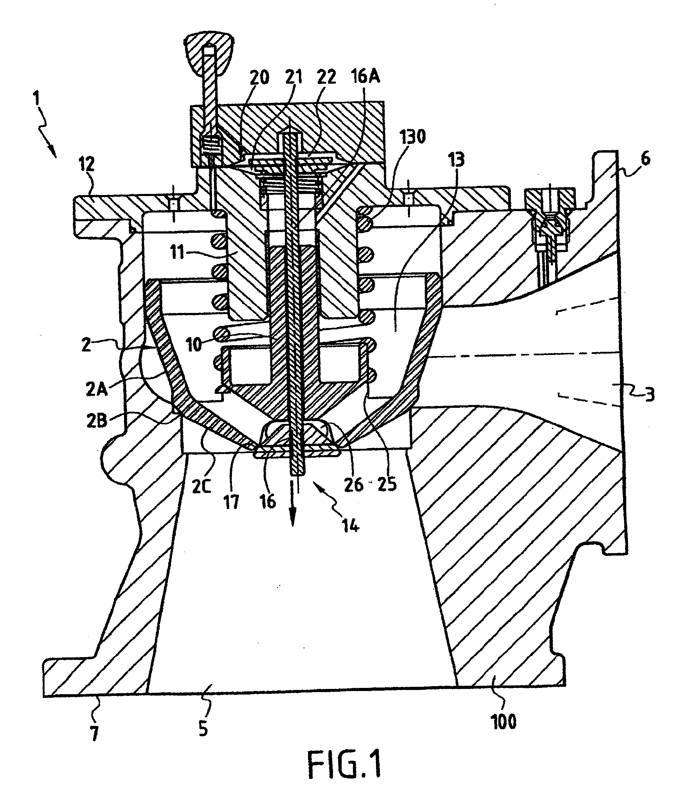

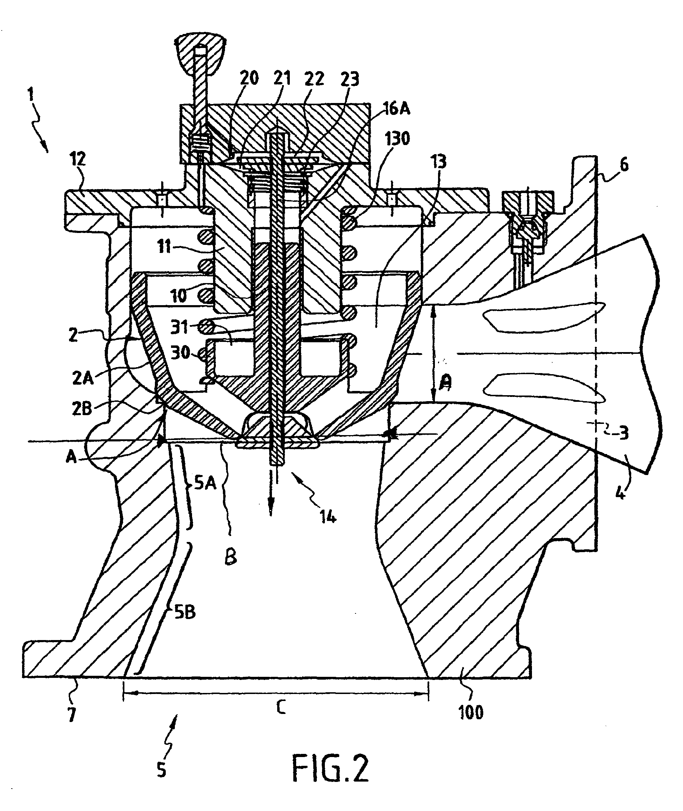

Comme on peut le voir sur les figures 1 et 2, la coupelle 2A comporte trois étages.

L'étage arrière est cylindrique de révolution avec un rayon constant au long de l'axe longitudinal.

Les deux autres étages sont également cylindriques de révolution mais le rayon varie au long de l'axe longitudinal en décroissant vers l'avant de la coupelle.

Le siège 2B de la coupelle 2A est usiné dans le corps du dispositif mais, de préférence, ce siège est formé par une bague 120 rapportée dans le corps du dispositif de manière à faciliter l'entretien.

Une autre variante consiste à prévoir une bague 121 rapportée sur la coupelle 2A.

Ces bagues 120 ou 121 sont en matériau moins dur que ceux venant en contact avec l'obturateur principal ou le corps du dispositif de façon à constituer des pièces d'usure facilement échangeables.

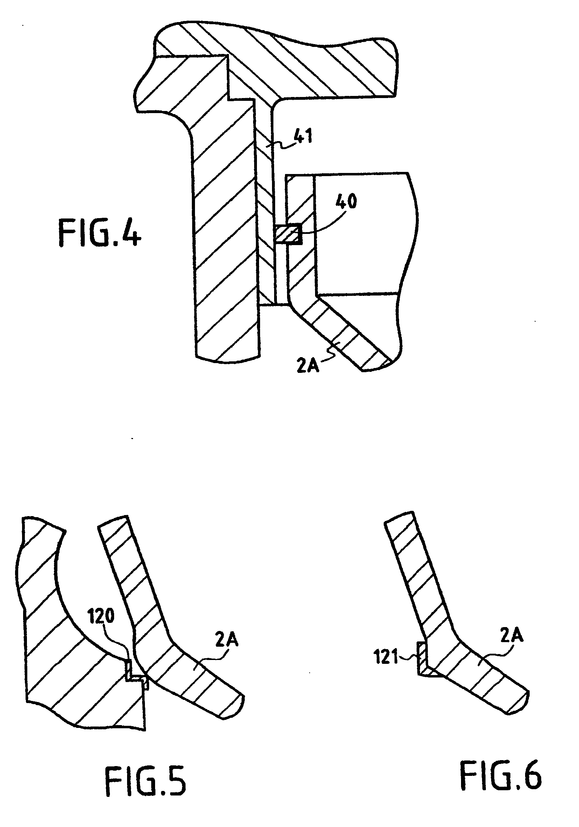

Comme on peut le voir à la figure 4, on a prévu sur l'étage arrière de l'obturateur un joint 40.

Ce joint qui n'est pas prévu pour assurer une étanchéité parfaite permet de réduire le jeu de fonctionnement à environ deux à trois dixièmes de millimètres.

Le jeu de chaque côté peut alors être plus important, ce qui évite le grippage du piston ou de la coupelle.

Dans une forme avantageuse, au lieu que l'étage arrière de la coupelle 2A coopère avec un faible jeu de fonctionnement avec le corps du dispositif, cet étage arrière coopère avec une chemise 41, cette chemise étant rapportée dans le corps mais de préférence cette chemise est portée par la paroi arrière.

Selon une caractéristique de l'invention, l'aire C de la section de la conduite de sortie prise en son extrémité distale est supérieure à l'aire A de la section de la conduite d'entrée prise en son extrémité située à proximité du dispositif de contrôle de l'écoulement.

Par extrémité distale, on comprendra l'extrémité de la conduite de sortie la plus éloignée de la coupelle ou piston.

Avantageusement, l'aire B de la section de la conduite de sortie prise en son extrémité proximale au niveau du siège du piston ou coupelle est identique à l'aire A de la section de la conduite d'entrée prise en son extrémité située à proximité du dispositif de contrôle de l'écoulement.

La section C de l'extrémité distale de la conduite de sortie est supérieure à la section B dudit tronçon prise en sa partie proximale.

Avantageusement, la conduite de sortie comprend dans le sens d'évacuation de l'air un tronçon convergent 5A suivi d'un tronçon divergent 5B.

Cette disposition permet d'augmenter la vitesse de l'air au niveau du rétrécissement et donc d'améliorer la déflagration.

## Revendications

1. Dispositif (1) de décharge brusque d'air comprenant un dispositif (2) de contrôle d'écoulement d'air disposé entre une conduite (3) d'entrée et une conduite (5) de sortie, lequel dispositif de contrôle comprend un obturateur (16) dit d'évacuation contrôlant l'écoulement de l'air contenu dans une chambre dite arrière (13) vers la conduite (5) de sortie, cet air maintenant un obturateur principal (2A) sur son siège (2B),
ce dispositif de décharge étant **CARACTERISE en ce que** le siège (17) de cet obturateur (16) d'évacuation se situe au niveau de la face avant (2C) de l'obturateur principal (2A) et pour l'évacuation de l'air contenu dans la chambre arrière, l'obturateur (16) d'évacuation se déplace vers l'avant en sens opposé à celui de l'obturateur principal (2A) lorsqu'il quitte son siège (2B).

2. Dispositif de décharge brusque d'air selon la revendication 1 **caractérisé en ce que** l'obturateur (16) d'évacuation est porté par l'extrémité d'une tige (16A) de commande guidée en translation au travers de l'obturateur principal et l'extrémité de cette tige (16A) de manoeuvre est reliée à un moyen moteur (20) pour induire son déplacement.

3. Dispositif de décharge brusque d'air selon la revendication 2 **caractérisé en ce que** le moyen moteur (20) est un dispositif électromécanique qui s'appuie ou entraîne la tige (16A) de manoeuvre dans le sens souhaité.

4. Dispositif de décharge brusque d'air selon la revendication 2 **caractérisé en ce qu'**une membrane déformable qui, soumise à une pression s'exerçant dans une chambre (21) dite de commande, se déplace pour entraîner la manoeuvre de la tige (16A) de manoeuvre.

5. Dispositif de décharge brusque d'air selon la revendication 2 **caractérisé en ce que** l'obturateur principal (2A) est une coupelle et cette coupelle présente à l'arrière un coulisseau (10) qui coopère avec une coulisse (11).

6. Dispositif de décharge brusque d'air selon la revendication 5 **caractérisé en ce que** la partie concave de la coupelle (2A) loge une cuvette (30) dont la concavité est tournée vers l'arrière du corps du dispositif face à une coulisse et cette cuvette (30) et la coulisse forment en position de recul de la coupelle (2A) une chambre (31) dite de compression formant un amortisseur pour le recul de la dite coupelle.

7. Dispositif de décharge brusque d'air selon la revendication 1 ou 5 **caractérisé en ce que** le siège (2B) de l'obturateur (2A) est formé par une bague (120) rapportée dans le corps du dispositif de décharge.

8. Dispositif de décharge brusque d'air selon la revendication. 1 ou 5 **caractérisé en ce qu'**une bague (121) est rapportée sur l'obturateur principal (2A).

9. Dispositif de décharge brusque d'air selon la revendication 5 **caractérisé en ce qu'**on a prévu sur l'étage arrière de l'obturateur principal (16A) un joint (40).

10. Dispositif de décharge brusque d'air selon la revendication 5 **caractérisé en ce** l'étage arrière de la coupelle (2A) coopère avec une chemise (41).

11. Dispositif de décharge brusque d'air selon la revendication 10 **caractérisé en ce que** la chemise (41) est rapportée dans le corps mais de préférence cette chemise est portée par la paroi arrière (12).

12. Dispositif de décharge brusque d'air selon la revendication 1 **caractérisé en ce que** l'aire (C) de la section de la conduite de sortie prise en son extrémité distale est supérieure à l'aire (A) de la section de la conduite d'entrée prise en son extrémité située à proximité du dispositif de contrôle de l'écoulement.

13. Dispositif de décharge brusque d'air selon la revendication 12 **caractérisé en ce que** la conduite (5) de sortie comprend dans le sens d'évacuation de l'air un tronçon convergent (5A) suivi d'un tronçon divergent (5B).

## Claims

1. Device (1) for abruptly discharging air, comprising an air flow control device (2) disposed between an inlet pipe (3) and an outlet pipe (5), which control device comprises an evacuation valve (16) controlling the air flow contained in a rear chamber (13) to the outlet pipe (5), this air retaining a main valve (2A) on its seat (2B),
this discharge device being **characterised in that** the seat (17) of this evacuation valve (16) is disposed on the front face (2C) of the main valve (2A) and in order to evacuate the air contained in the rear chamber, the evacuation valve (16) moves forwards in the direction opposite that of the main valve (2A) when it leaves its seat (2B).

2. Device for abruptly discharging air as claimed in claim 1, **characterised in that** the evacuation valve (16) is borne on the end of a control rod (16A) guided in translation through the main valve and the end of this control rod (16A) is linked to a motor means (20) to induce its displacement.

3. Device for abruptly discharging air as claimed in claim 2, **characterised in that** the motor means (20) is an electromechanical device which is supported on or drives the control rod (16A) in the desired direction.

4. Device for abruptly discharging air as claimed in claim 2, **characterised in that** a deformable membrane which is subjected to a pressure prevailing in a control chamber (21) moves in order to drive the movement of the control rod (16A).

5. Device for abruptly discharging air as claimed in claim 2, **characterised in that** the main valve (2A) is a cup and this cup has a slider (10) at the rear which co-operates with a slide (11).

6. Device for abruptly discharging air as claimed in claim 5, **characterised in that** the concave part of the cup (2A) houses a dish (30), the concave aspect of which is directed towards the rear of the body of the device facing a slide, and when the cup (2A) is in the retracted position, this dish (30) and the slide form a compression chamber (31) serving as a damper for the backward movement of said cup.

7. Device for abruptly discharging air as claimed in claim 1 or 5, **characterised in that** the seat (2B) of the valve (2A) is formed by a detachable ring (120) inside the body of the discharge device.

8. Device for abruptly discharging air as claimed in claim 1 or 5, **characterised in that** a ring (121) is detachably fitted on the main valve (2A).

9. Device for abruptly discharging air as claimed in claim 5, **characterised in that** a gasket (40) is provided on the rear part of the main valve (16A).

10. Device for abruptly discharging air as claimed in claim 5, **characterised in that** the rear part of the cup (2A) co-operates with a liner (41).

11. Device for abruptly discharging air as claimed in claim 10, **characterised in that** the liner (41) is detachably fitted inside the body but this-liner is preferably supported by the rear wall (12).

12. Device for abruptly discharging air as claimed in claim 1, **characterised in that** the surface area (C) of the section of the outlet pipe at its distal end is bigger than the surface area (A) of the section of the inlet pipe at its end disposed close to the flow control device.

13. Device for abruptly discharging air as claimed in claim 12, **characterised in that** the outlet pipe (5) comprises a converging section (5A) followed by a diverging section (5B) in the direction in which the air is evacuated.

## Patentansprüche

1. Vorrichtung zum plötzlichen Ablassen von Luft umfassend eine Kontrollvorrichtung (2) für das Ausströmen der Luft, welche zwischen einer Eingangsleitung (3) und einer Ausgangsleitung (5) angeordnet ist, wobei diese Kontrollvorrichtung einen Verschluss (16) umfasst für die Entleerung, welcher das Ausströmen der in einer hinteren Kammer (13) enthaltenen Luft in Richtung auf die Ausgangsleitung (5) kontrolliert, wobei diese Luft einen Hauptverschluss (2A) auf seinem Sitz (2B) hält,
wobei diese Vorrichtung zum Ablassen **dadurch gekennzeichnet ist, dass** der Sitz (17) des Verschlusses (16) für die Entleerung sich in Höhe der Vorderseite (2C) des Hauptverschlusses (2A) befindet und für die Entleerung der in der hinteren Kammer enthaltenen Luft der Verschluss (16) für die Entleerung sich nach vorn bewegt in entgegengesetzter Richtung zum Hauptverschluss (2A), wenn er seinen Sitz (2B) verlässt.

2. Vorrichtung zum plötzlichen Ablassen von Luft nach Anspruch 1, **dadurch gekennzeichnet, dass** der Verschluss (16) für die Entleerung gehalten wird von dem Ende einer Betätigungsstange (16 A), geführt in Translationsrichtung durch den Hauptverschluss hindurch, wobei das Ende dieser Betätigungsstange (16 A) mit einem motorischen Mittel (20) in Verbindung steht, um deren Bewegung einzuleiten.

3. Vorrichtung zum plötzlichen Ablassen von Luft nach Anspruch 2, **dadurch gekennzeichnet, dass** das motorische Mittel (20) eine elektromechanische Vorrichtung ist, die sich abstützt oder die Betätigungsstange (16 A) in der gewünschten Richtung mitnimmt.

4. Vorrichtung zum plötzlichen Ablassen von Luft nach Anspruch 2, **dadurch gekennzeichnet, dass** eine verformbare Membran, wenn sie von einem in einer Betätigungskammer (21) herrschenden Druck beaufschlagt wird, sich verlagert, um die Betätigung der Betätigungsstange (16 A) einzuleiten.

5. Vorrichtung zum plötzlichen Ablassen von Luft nach Anspruch 2, **dadurch gekennzeichnet, dass** der Hauptverschluss (2A) eine Schale (ein Topf) ist, die rückseitig einen Schieber (10) aufweist, welcher mit einer Führungseinrichtung (11) zusammenwirkt.

6. Vorrichtung zum plötzlichen Ablassen von Luft nach Anspruch 5, **dadurch gekennzeichnet, dass** der konkave Abschnitt der Schale (2A) eine Wanne (30) aufnimmt, deren Konkavität zur Rückseite des Körpers der Vorrichtung gewandt ist, gegenüber einer Führungseinrichtung, wobei diese Wanne (30) und die Führungseinrichtung in der zurückgezogenen Position der Schale (2A) eine Kompressionskammer (31) bilden, welche ein Dämpfungsglied für die Rückbewegung der Schale bildet.

7. Vorrichtung zum plötzlichen Ablassen von Luft nach Anspruch 1 oder 5, **dadurch gekennzeichnet, dass** der Sitz (2B) des Verschlusses (2A) von einem Ring (120) gebildet ist, welcher sich an der Vorrichtung zum Ablassen befindet.

8. Vorrichtung zum plötzlichen Ablassen von Luft nach Anspruch 1 oder 5, **dadurch gekennzeichnet, dass** ein Ring (12) sich an dem Hauptverschluss (2A) befindet.

9. Vorrichtung zum plötzlichen Ablassen von Luft nach Anspruch 5, **dadurch gekennzeichnet, dass** auf der hinteren Stufe des Hauptverschlusses (16 A) eine Dichtung (40) vorgesehen ist.

10. Vorrichtung zum plötzlichen Ablassen von Luft nach Anspruch 5, **dadurch gekennzeichnet, dass** die hintere Stufe der Schale (2A) mit einem Überzug (41) zusammenwirkt.

11. Vorrichtung zum plötzlichen Ablassen von Luft nach Anspruch 10, **dadurch gekennzeichnet, dass** der Überzug (41) in dem Körper gehalten ist, wobei jedoch vorzugsweise dieser Überzug von der hinteren Wand (12) getragen wird.

12. Vorrichtung zum plötzlichen Ablassen von Luft nach Anspruch 1, **dadurch gekennzeichnet, dass** die Fläche (Weite) (C) des Abschnitts der Ausgangsleitung an ihrem entfernten Ende größer ist als die Fläche (A) des Abschnitts der Eingangsleitung an ihrem Ende, welches sich in Nähe der Kontrollvorrichtung für das Ausströmen befindet.

13. Vorrichtung zum plötzlichen Auslassen von Luft nach Anspruch 12, **dadurch gekennzeichnet, dass** die Ausgangsleitung (5) in Richtung der Entleerung der Luft einen konvergenten Abschnitt (5A) umfasst, auf den ein divergenter Abschnitt (5B) folgt.
